# EUROPEAN PATENT SPECIFICATION

(11) **EP 4 239 386 B1**
(45) Date of publication and mention of the grant of the patent: **31.12.2025**
(21) Application number: 23155783.6
(22) Date of filing: 09.02.2023
(51) Int. Cl.: G02B 6/44, G02B 6/48

(54) **OPTICAL FIBER CABLE WITH ELONGATED STRENGTH MEMBERS AND MANUFACTURING METHOD THEREOF**
FASEROPTISCHES KABEL MIT LÄNGLICHEN VERSTÄRKUNGSELEMENTEN UND HERSTELLUNGSVERFAHREN DAFÜR
CÂBLE À FIBRE OPTIQUE AVEC ÉLÉMENTS DE RENFORT ALLONGÉS ET SON PROCÉDÉ DE FABRICATION

(30) Priority: 09.02.2022 IN 202211006994
(43) Date of publication of application: 06.09.2023
(73) Proprietor: Sterlite Technologies Limited, Haryana 122002 (IN)
(72) Inventor: Shukla, Vikash, 122002 Gurugram (IN); Mishra, Atul, 122002 Gurugram (IN)
(74) Representative: Petraz, Gilberto Luigi

(56) References cited:
- WO-A1-2010/082588
- US-A- 4 169 657
- US-A1- 2002 159 726

## Description

### TECHNICAL FIELD

Embodiments of the present disclosure relate to the field of optical fiber cable and more particularly, relate to an optical fiber cable with elongated strength members and manufacturing method thereof.

This application claims the benefit of Indian Application No. 202211006994 titled "OPTICAL FIBER CABLE WITH ELONGATED STRENGTH MEMBERS AND MANUFACTURING METHOD THEREOF" filed by the applicant on February 09th, 2022.

### BACKGROUND ART

Telecommunications networks include access networks where end-user subscribers connect to service providers. With the advancement of science and technology, various modern technologies are being employed for communication purposes. With a rapid rise in the development and usage of networking technology, the field of optical fiber cables and their applications has majorly evolved.

Optical fiber cables have been extensively used as signal transmission media, and have specific features in that not only are they large in data transmission capacity, but they are also free from electromagnetic induction. Accordingly, an optical fiber cable or unit can be incorporated in an overhead transmission line or an ordinary power line. Over the last few decades, the need for laying overhead cables has increased rapidly due to the advancement in optical networks. The overhead cables are laid to reduce load on pipeline resources and reduce cost of laying cables.

The overhead cables include optical fiber cables that are used for aerial applications, also known as aerial drop optical fiber cables. The aerial drop optical fiber cables are typically used for fiber to the home application. The aerial drop optical fiber cables are compact in structure and have a layer stranded structure.

The aerial drop optical fiber cables include multiple numbers of tubes with each tube having multiple numbers of optical fibers. In particular, the aerial drop optical fiber cables need to have a predefined break load in order to be installed aerially complying with the safety standards. So, a proper choice of cable components is very crucial for developing these cables. These cables include strength members which may be embedded inside a sheath of the cables.

Aramid yarns as strength members are well proven, however there may be a problem in using them when there is a defined maximum tensile strength requested for the cable. The load at which aramid yarns ultimately breaks is not as well defined as for metal or grp (glass reinforced polymer) strength members, but rather lays in a range which may provide uncertainty in the application, unless the size is increased, resulting in very high costs. Moreover, aramid yarns would not provide resistance to axial compression, e.g. due to thermal shrinkage. Strength members made of grp have a lower strength to diameter ratio than that of metallic strength members. As a consequence, if a cable endowed with grp members is desired to have the same tensile resistance than a cable with metallic strength members, such cable should have a greater outer diameter. Further, the conventional embedded strength members i.e. dielectric strength members have an elongation at break of greater than 2% which may be dangerous.

Currently, there are a few patent applications providing drop cables with metallic strength members embedded.

WIPO patent application no. WO2019128473A1 titled "High-density pressure-resistant optical fiber bundle cable for use in datacenter" discloses a high-density compression-resistant fiber bundle cable for a data center comprising a micro-bundle fiber provided with a plurality of optical fibers, an aramid layer on an outer side of the optical fiber, a sheath layer coated on the outer portion of the aramid layer, and three non-metallic reinforcing members embedded in the sheath layer. In particular, the three non-metallic reinforcing members form a triangle.

Chinese patent application no. CN110824644A titled "Optical fiber bundle self-supporting aerial optical cable" discloses an optical fiber bundle self-supporting aerial optical cable which comprises a cable core and an outer sheath for coating the cable core. In particular, a metal reinforcing piece is embedded in the outer sheath, and the elongation of the metal reinforcing piece is consistent with that of the outer sheath.

Chinese patent application no. CN111580233A titled "Full-dry type non-bundle yarn ultra-light aerial optical cable and manufacturing method thereof" discloses an optical fiber cable comprising a cable core and an outer sheath and is characterized in that the cable core is formed by twisting optical fiber bundles.

Publication US 4 169 657 A discloses a fiber optic cable having a plurality of pre-stretched strength members. The strength members are maintained in their pre-stretched condition by being adhered to at least one laminant after stretching. The pre-stretching is achieved by applying a stretching force equal to or greater than the predetermined longitudinal break strength of the associated optical fibers. The laminate holding the strength members is disposed parallel to and substantially surrounding the fiber optic core. In this way, the strength members act to counterbalance longitudinal stress forces applied to the fiber optic core at the cable termination.

However, there are a number of drawbacks in the current technologies providing drop cables with metallic strength members embedded. The prior arts disclose drop cables with embedded strength members but do not provide for pre-elongation of strength members. Moreover, the metallic tension members provided in the currently similar technologies are typically braided wire, which do not have appropriate mechanical characteristics to enable the cable to retain a shape. Furthermore, the currently similar technologies do not provide optical fiber cable for aerial application with elongated strength members with pre-defined break load.

Accordingly, to overcome the disadvantages of the prior arts, there is a need for a technical solution that overcomes the above-stated limitations in the prior arts. The present disclosure provides an optical fiber cable with elongated strength members and manufacturing method thereof.

### SUMMARY OF THE DISCLOSURE

Embodiments of the present disclosure provide an optical fiber cable comprising one or more tubes, a sheath surrounding the one or more tubes and one or more strength members embedded in the sheath. In particular, the one or more tubes encloses at least one optical fiber. Moreover, the one more strength members are in a pre-elongated configuration. Furthermore, the one or more strength members are elongated by 0.02% - 0.1% in the pre-elongated configuration.

According to the first aspect of the present disclosure, the optical fiber cable has a tensile break load of less than 2100N.

In accordance with an embodiment of the present disclosure, each of the one or more strength members is two or more stranded metal wires.

According to a second aspect of the present disclosure, the one or more strength members are embedded at a tension of 14.709975-78.4532 N (1.5-8 kgf).

According to a third aspect of the present disclosure, the one or more strength members have an elongation at break less than or equal to 2%.

According to a fourth aspect of the present disclosure, the one or more strength members have an average surface roughness of 1um to 5um.

Another embodiment of the present disclosure relates to a method of manufacturing an optical fiber cable comprising the steps of paying-off one or more tubes to form core of the optical fiber cable and extruding a sheath surrounding the one or more tubes. In particular, the one or more tubes enclose at least one optical fiber. Moreover, the one or more strength members are embedded in the sheath during extrusion. Furthermore, the one more strength members are embedded under a tension of greater than or equal to 14.709975N (1.5 kgf).

According to a fifth aspect of the present disclosure, the one or more strength members are elongated by 0.02% - 0.1% under the tension.

In accordance with an embodiment of the present disclosure, the optical fiber cable has a tensile break load of less than 2100N.

In accordance with an embodiment of the present disclosure, the one or more strength members are stranded metal wires.

In accordance with an embodiment of the present disclosure, the one or more strength members are embedded at a tension of less than 78.4532 N (8 kgf).

According to a sixth aspect of the present disclosure, the one or more strength members have an elongation at break less than or equal to 2%.

In accordance with an embodiment of the present disclosure, the one or more strength members have an average surface roughness of 1um to 5um.

In accordance with an embodiment of the present disclosure, the at least one optical fiber comprises an inner core region and an outer cladding region.

In accordance with an embodiment of the present disclosure, the at least one optical fiber has a diameter of 160 um to 250 um.

In accordance with an embodiment of the present disclosure, the one or more tubes have a thickness of 0.1 millimetre to 0.25 millimetre.

In accordance with an embodiment of the present disclosure, the one or more tubes have an inner diameter of 0.9 millimetres to 1.35 millimetres.

In accordance with an embodiment of the present disclosure, the one or more tubes have an outer diameter of 1.1 millimetres to 1.5 millimetres.

In accordance with an embodiment of the present disclosure, the sheath has a thickness of 1.2 millimetre to 1.8 millimetre.

In accordance with an embodiment of the present disclosure, the one or more strength members have a diameter of 0.3 mm to 0.7 mm.

The foregoing objectives of the present disclosure are attained by providing an optical fiber cable with elongated strength members and manufacturing method thereof.

### BRIEF DESCRIPTION OF THE DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a snapshot illustrating an optical fiber cable for aerial applications in accordance with one embodiment of the present disclosure;
Fig. 2 is a snapshot illustrating another optical fiber cable for aerial applications in accordance with one embodiment of the present disclosure;
Fig. 3 is a snapshot illustrating yet another optical fiber cable for aerial applications in accordance with one embodiment of the present disclosure;
Fig. 4 is a is a flowchart illustrating a method for manufacturing the optical fiber cables in accordance with one embodiment of the present disclosure;

### REFERENCE LIST

Optical fiber cable - 100, 200, 300
At least one optical fiber - 102
One or more tubes - 104
Sheath - 106
One or more strength members - 108
First layer - 110
Water blocking gel - 112

The optical fiber cable is illustrated in the accompanying drawings, in which like reference letters indicate corresponding parts in the various figures. It should be noted that the accompanying figures are intended to present illustrations of exemplary embodiments of the present disclosure. These figures are not intended to limit the scope of the present disclosure. It should also be noted that the accompanying figures are not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Layer stranded optical cable structure includes optical fibers enclosed inside loose tubes and a water absorbing or blocking compound filled inside the loose tubes.

Breaking load is tension steadily applied on an element just sufficient to break or rupture the element.

Optical fiber cable includes a plurality of fibers and carries information in the form of data between two places using light technology.

Lay length is a longitudinal distance along the length of the optical fiber cable 100 required for the one or more tubes 104 to go all the way around each other.

Medium density polyethylene is a thermoplastic material produced by chromium/silica catalysts, Ziegler-Natta catalysts or metallocene catalysts.

Elongation at break is a measurement of how much a material can be stretched before it breaks. In particular, elongation at break is also called "fracture strain" or "tensile elongation at break". Moreover, elongation at break is the percentage increase in length that material will achieve before breaking and a measurement of an amount a material will plastically and elastically deform up to fracture. The material's final length is compared with its original length to determine the percent elongation.

Surface roughness is irregularities inherent in the production process and quantified by deviations in direction of a normal vector of a real surface from its ideal form. If the deviations are large, the surface is rough and if the deviations are small, the surface is smooth.

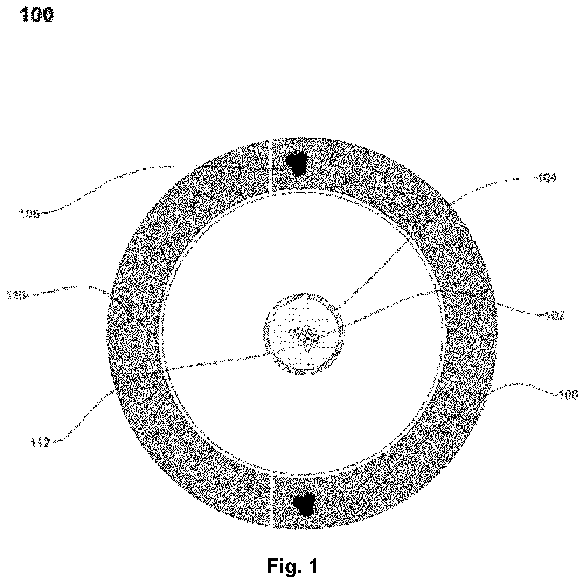

Fig. 1 illustrates a snapshot of an optical fiber cable 100 for aerial applications in accordance with one embodiment of the present disclosure. The optical fiber cable 100, 200, 300 comprises one or more tubes 104, a sheath 106 surrounding the one or more tubes 104 and one or more strength members 108 embedded in the sheath 106. In particular, the one or more tubes 104 encloses at least one optical fiber 102. Moreover, the one more strength members 108 are in a pre-elongated configuration. Furthermore, the one or more strength members 108 are elongated by 0.02% - 0.1% in the pre-elongated configuration.

Further, the optical fiber cable 100 is used for telecommunication applications and networking applications. The optical fiber cable 100 can be installed aerially and used for fiber to the home applications (FTTH). Additionally, the optical fiber cable 100 adopts a layer stranded optical cable structure.

Further, the optical fiber cable 100 is a work safe optical fiber cable. In addition, the optical fiber cable 100 has a pre-defined breaking load. The pre-defined breaking load is needed in order for the optical fiber cable 100 to be installed aerially and comply with safety standards. The optical fiber cable 100 includes strength members that break more safely when an external load is applied. And, the optical fiber cable 100 includes elements which have properties different from elements made of conventional materials. The properties of the elements of the optical fiber cable 100 are changed in order for the optical fiber cable 100 to be installed aerially and possess the pre-defined breaking load.

In accordance with an embodiment of the present disclosure, the optical fiber cable 100 has a reduced diameter suitable for aerial drop applications. Particularly, the optical fiber cable 100 comprises one or more tubes 104, a sheath 106 and one or more strength members 108. Each of the one or more tubes 104 encloses at least one optical fiber 102.

In one embodiment, the optical fiber cable 100 comprises a first layer 110. The optical fiber cable 100 is a cable used for carrying light over long distances. Moreover, the optical fiber cable 100 may simply be used to transmit optical signals that may carry sensor data or communication data.

The at least one optical fiber 102 extends longitudinally along a length of the optical fiber cable 100.

In an embodiment, the optical fiber cable 100 comprises a plurality of optical fibers. The at least one optical fiber 102 is a fiber used for transmitting information as light pulses from one end to another. Moreover, the at least one optical fiber 102 is a thin strand of glass or plastic capable of transmitting optical signals. Furthermore, the at least one optical fiber 102 is configured to transmit large amounts of information over long distances with relatively low attenuation. Further, the at least one optical fiber 102 comprises a core region and a cladding region. The core region is an inner part of an optical fiber and the cladding section is an outer part of the optical fiber. Further, the core region is defined by a central longitudinal axis of each of the at least one optical fiber 102. The cladding region surrounds the core region.

The core region and the cladding region are formed along the central longitudinal axis of the at least one optical fiber 102. Additionally, the core region and the cladding region are formed during the manufacturing stage of the at least one optical fiber 102. The core region has a refractive index which is greater than a refractive index of the cladding region.

In an embodiment of the disclosure, the core region has a higher refractive index than the cladding region.

In another embodiment, the at least one optical fiber 102 has a diameter of 160 um to 250 um. Alternatively, the diameter of the at least one optical fiber 102 may vary.

In yet another embodiment of the present disclosure, the at least one optical fiber 102 is a single mode fiber. Alternatively, the at least one optical fiber 102 is a multimode fiber.

In yet another embodiment, the at least one optical fiber 102 is at least one of loose fibers, flat ribbon, corrugated ribbon and Intermittently Bonded Ribbon.

In yet another embodiment, the at least one optical fiber 102 is a ribbon such that adjacent optical fibers in the ribbon are intermittently connected along length.

In accordance with an embodiment of the present disclosure, the optical fiber cable 100 comprises the one or more tubes 104. Each of the one or more tubes 104 encloses the at least one optical fiber 102.

In an exemplary example, each of the one or more tubes 104 encloses 12 optical fibers. Alternatively, the one or more tubes 104 may enclose any number of optical fibers.

In an embodiment, the number of the optical fibers 102 in the optical fiber cable 100 is greater than or equal to 72. Alternatively, the number of the optical fibers 102 in the optical fiber cable 100 may vary.

In one embodiment, each of the one or more tubes 104 surrounds the at least one optical fiber 102. The one or more tubes 104 cover the at least one optical fiber 102. Particularly, the one or more tubes 104 comprise one of loose tubes, buffer tubes, tight buffered tubes and the like. Each of the one or more tubes 104 encapsulates at least one optical fiber 102. Moreover, the one or more tubes 104 provide support and protection to the at least one optical fiber 102 against crush, bend and stretch. Furthermore, the one or more tubes 104 protect the at least one optical fiber 102 and prevent ingression of water inside.

Further, the one or more tubes 104 provide mechanical isolation, physical damage protection and identification of each of the at least one optical fiber 102.

In an embodiment of the present disclosure, the one or more tubes 104 provide a single layer core construction.

In another embodiment, the optical fiber cable 100 comprises a single tube.

In yet another embodiment, the optical fiber cable 100 comprises three tubes.

In another embodiment, the optical fiber cable 100 comprises eight tubes. The one or more tubes 104 are stranded around each other.

In an embodiment of the present disclosure, the stranding is S-Z stranding. The one or more tubes 104 are wound around each other in sections with a first direction of winding in an S-shape alternating with the sections with a second direction of winding in a Z-shape. Moreover, the first direction is a clockwise direction and the second direction is an anticlockwise direction. Furthermore, the SZ stranding of the one or more tubes 104 is performed in order to maintain a uniform lay length, mid-spanning and achieve higher production speeds as compared to helical stranding. Further, the S-Z stranding allows uniform distribution of the stress across the one or more tubes 104. The S-Z stranding may have any number of turns between the S-shape and the Z-shape.

In accordance with an embodiment of the present disclosure, the one or more tubes 104 are made of low smoke zero halogen (LSZH) material. Alternatively, the one or more tubes 104 may be made of any other suitable material. The cross section of the one or more tubes 104 is circular in shape. Alternatively, the cross section of the one or more tubes 104 may be of any suitable shape.

In an embodiment, the one or more tubes 104 have a uniform structure and dimensions. The one or more tubes 104 have a thickness.

In one embodiment of the present disclosure, the thickness of one or more tubes 104 is equal. Alternatively, the thickness of one or more tubes 104 is 0.1 millimetre to 0.25 millimetre. Moreover, the thickness of the one or more tubes 104 may vary. Furthermore, the one or more tubes 104 have an inner diameter and an outer diameter.

In an embodiment, the inner diameter and the outer diameter of the one or more tubes 104 is fixed.

In another embodiment, the inner diameter of the one or more tubes 104 is 0.9 millimetres to 1.35 millimetres. Alternatively, the inner diameter of the one or more tubes 104 may vary.

In yet another embodiment, the outer diameter of each of the one or more tubes 104 is 1.1 millimetres to 1.5 millimetres. Alternatively, the outer diameter of the one or more tubes 104 may vary.

In accordance with an embodiment of the present disclosure, the optical fiber cable 100 comprises the sheath 106. The sheath 106 encapsulates the one or more tubes 104.

In an embodiment of the disclosure, the sheath 106 encapsulates one or more layers surrounding the one or more tubes 104.

In another embodiment, the sheath 106 is made of one of UV proof black medium density polyethylene material and UV proof black high density polyethylene material. Alternatively, the sheath 106 may be made of any other suitable material. The sheath 106 protects the optical fiber cable 100 from harsh environment and harmful UV rays. Moreover, the sheath 106 has the inherent ability to resist crushes, kinks and tensile stress.

In yet another embodiment of the disclosure, the sheath 106 has a thickness of 1.2 millimetre to 1.8 millimetre. Alternatively, the sheath 106 may have any suitable thickness.

In accordance with an embodiment of the present disclosure, the optical fiber cable 100 comprises the one or more strength members 108. The one or more strength members 108 are embedded in the sheath 106.

In one embodiment, the one or more strength members 108 lie substantially along a longitudinal axis of the optical fiber cable 100. Alternatively, the one or more strength members 108 may not lie along the longitudinal axis. Moreover, the one or more strength members 108 provide tensile strength and stiffness to the optical fiber cable 100.

Furthermore, the one more strength members 108 are in a pre-elongated configuration. The one or more strength members 108 are elongated by 0.02% - 0.1% in the pre-elongated configuration. The pre-elongation is optimized so that the one or more strength members 108 are in a safe elongated/stretched state and can achieve the elongation at break more rapidly during an external break load. Further, the pre-elongated strength members break more safely in-case an external load is applied.

In one embodiment, each of the one or more strength members 108 is stranded metallic wires.

In another embodiment, the stranded metallic wires are made of steel. Alternatively, the metallic wires are made of brass plated steel wires.

In yet another embodiment of the present disclosure, the one or more strength members 108 are embedded at a tension of 14.709975-78.4532 N (1.5-8 kgf). Alternatively, the one or more strength members 108 may be embedded at any suitable value of tension. The tension value of 14.709975-78.4532 N (1.5-8 kgf) helps achieve optimized pre-elongation in the embedded one or more strength members 108.

In yet another embodiment, the one or more strength members 108 have an elongation at break less than or equal to 2%.

In yet another embodiment, the one or more strength members 108 have an average surface roughness of 1um to 5um. The average surface roughness in the range of 1um to 5um is selected so that the adhesion between a material of the one or more strength members 108 and the sheath 106 material is good. Moreover, the one or more strength members 108 are characterized by a diameter.

In one embodiment, the one or more strength members 108 have a diameter of 0.3 mm to 0.7 mm. Alternatively, the diameter of the one or more strength members 108 may vary.

In another embodiment of the present disclosure, each of the one or more strength members 108 comprises two or more stranded metal wires.

In yet another embodiment of the present disclosure, the number of metallic wires in the one or more strength members 108 is 3. Alternatively, the number of metallic wires in the one or more strength members 108 may be more or less than 3.

In yet another embodiment, the number of strength members 108 is two. Alternatively, the number of strength members 108 may vary.

In accordance with an embodiment of the present disclosure, the optical fiber cable 100 comprises the one or more layers.

In an embodiment, the one or more layers comprise the first layer 110. Alternatively, the one or more layers may comprise more number of layers.

In another embodiment, the one or more layers comprise a single buffer tube that is a unitube surrounding the at least one optical fiber 102.

In yet another embodiment of the present disclosure, the first layer 110 is made of binder yarns. The binder yarn is used for binding a core of the optical fiber cable 100.

In yet another embodiment, the binder yarn is an aramid yarn. Alternatively, the binder yarn is made of any other suitable material.

In yet another embodiment, the optical fiber cable 100 may comprise layers such as Water Blocking Tape, Water Swellable Yarns and fire retardant tape. Alternatively, the optical fiber cable 100 may comprise more layers in addition or in place of the first layer 110.

In one embodiment, the optical fiber cable 100 comprises a water blocking gel 112. The water blocking gel 112 is filled inside the one or more tubes 104.

In another embodiment of the disclosure, the water blocking gel 112 is a thixotropic gel. The thixotropic gel prevents ingression of water inside each of the one or more tubes 104 and provides a cushioning to the optical fibers.

In yet another embodiment of the disclosure, the one or more tubes 104 may be loose tubes, buffer tubes and tight buffered tubes.

In accordance with an embodiment of the present disclosure, the optical fiber cable 100 may or may not include a ripcord.

In an embodiment, the ripcord is disposed inside the sheath 106. In particular, the ripcord may lie substantially along the longitudinal axis of the optical fiber cable 100. Moreover, the ripcord enables tearing of the sheath 106 to facilitate access to the one or more tubes 104.

In one embodiment, the ripcord may be made of a polyester material. Alternatively, the ripcord may be made of any other suitable material. The ripcord has a circular cross-section.

In accordance with an embodiment of the present disclosure, the optical fiber cable 100 may have a suitable diameter.

In an embodiment of the present disclosure, the diameter of the optical fiber cable 100 is 5 millimetres to 8 millimetres.

In another embodiment, the optical fiber cable 100 has a tensile break load of less than 2100 N. The aerial drop cables exert force on poles on which the drop cables are clamped whenever any external load is applied on the drop cable. This leads to poles being broken and damaged which increases maintenance cost. The break load of less than 2100 N ensures that the poles do not get damaged.

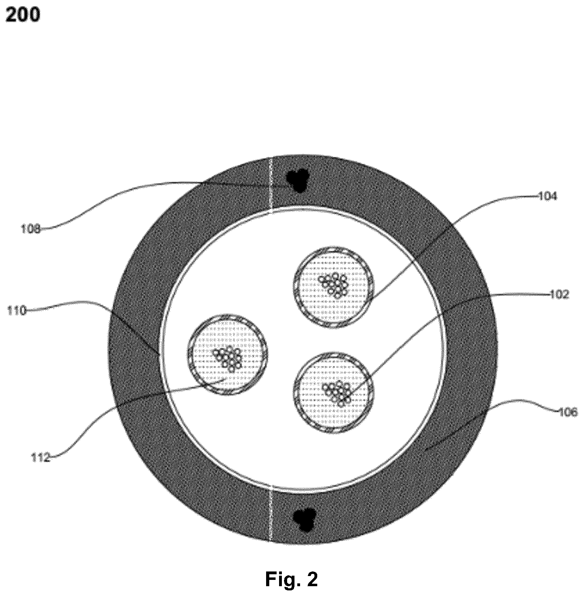

Fig. 2 is a snapshot illustrating another optical fiber cable 200 for aerial applications in accordance with one embodiment of the present disclosure.

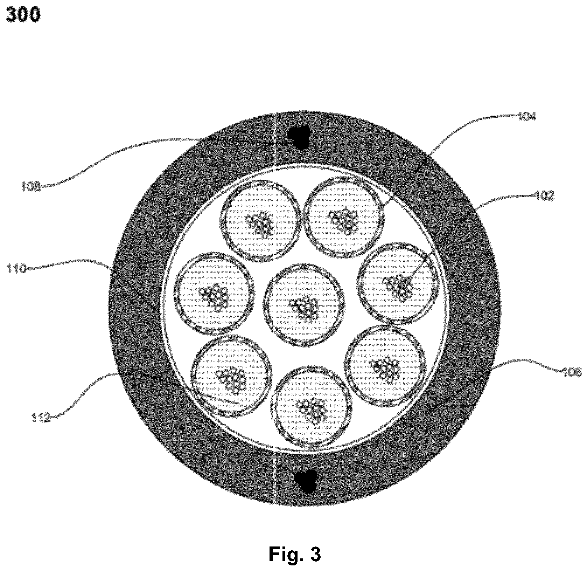

Fig. 3 is a snapshot illustrating yet another optical fiber cable 300 for aerial applications in accordance with one embodiment of the present disclosure.

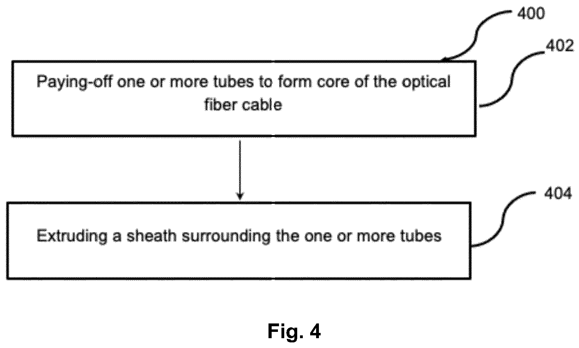

Fig. 4 is a flowchart illustrating a method 400 for manufacturing the optical fiber cables 100, 200, 300 in accordance with one embodiment of the present disclosure. Method 400 starts at step 402 and proceeds to step 404.

At step 402, the one or more tubes 104 are paid-off to form a core of the optical fiber cables 100, 200, 300. In particular, the one or more tubes 104 enclose at least one optical fiber 102.

At step 404, the sheath 106 is extruded. In particular, the sheath 106 surrounds the one or more tubes 104. Moreover, the one or more strength members 108 are embedded in the sheath 106 during extrusion. Furthermore, the one more strength members 108 are embedded under a tension of at least 14.709975 N (1.5 kgf).

The present disclosure of the optical fiber cable 100, 200, 300 with elongated strength members and manufacturing method thereof provides a number of advantages. The present disclosure provides an optical fiber cable for aerial applications with elongated strength members with pre-defined break load. Moreover, the present disclosure provides the optical fiber cable with strength members that break more safely when an external load is applied.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated.

## Claims

1. An optical fiber cable (100, 200, 300) comprising:
one or more tubes (104), wherein the one or more tubes (104) enclose at least one optical fiber (102);
a sheath (106) surrounding the one or more tubes (104); and
one or more strength members (108), wherein the one more strength members (108) are in a pre-elongated configuration,
**characterized in that**
the one or more strength members (108) are elongated by 0.02% - 0.1% in the pre-elongated configuration and **in that** the one or more strength members (108) are embedded in the sheath (106).

2. The optical fiber cable (100, 200, 300) as claimed in claim 1, wherein the optical fiber cable (100, 200, 300) has a tensile break load of less than 2100N.

3. The optical fiber cable (100, 200, 300) as claimed in claim 1, wherein each of the one or more strength members (108) comprises two or more stranded metal wires.

4. The optical fiber cable (100, 200, 300) as claimed in claim 1, wherein the one or more strength members (108) are embedded at a tension of 14.709975-78.4532 N (1.5-8 kgf).

5. The optical fiber cable (100, 200, 300) as claimed in claim 1, wherein the one or more strength members (108) have an elongation at break less than or equal to 2%.

6. The optical fiber cable (100, 200, 300) as claimed in claim 1, wherein the one or more strength members (108) have an average surface roughness of 1um to 5um.

7. A method of manufacturing an optical fiber cable (100, 200, 300) comprising:
paying-off one or more tubes (104) to form a core of the optical fiber cable (100, 200, 300), wherein the one or more tubes (104) enclose at least one optical fiber (102);
extruding a sheath (106) surrounding the one or more tubes (104),
**characterized in that** one or more strength members (108) are embedded in the sheath (106) during extrusion, wherein the one more strength members (108) are embedded under a tension of greater than or equal to 14.709975 N (1.5 kgf), and
the one or more strength members (108) are elongated by 0.02% - 0.1% under the tension.

8. The method as claimed in claim 7, wherein the optical fiber cable (100, 200, 300) has a tensile break load of less than 2100N.

9. The method as claimed in claim 7, wherein the one or more strength members (108) are stranded metal wires.

10. The method as claimed in claim 7, wherein the one or more strength members (108) are embedded at a tension of less than 78.4532 N (8 kgf).

11. The method as claimed in claim 7, wherein the one or more strength members (108) have an elongation at break less than or equal to 2%.

12. The method as claimed in claim 7, wherein the one or more strength members (108) have an average surface roughness of 1um to 5um.

13. The optical fiber cable (100, 200, 300) as claimed in claim 1, wherein the at least one optical fiber (102) comprises an inner core region and an outer cladding region.

14. The optical fiber cable (100, 200, 300) as claimed in claim 1, wherein the at least one optical fiber (102) has a diameter of 160 um to 250 um.

15. The optical fiber cable (100, 200, 300) as claimed in claim 1, wherein the one or more tubes (104) have a thickness of 0.1 millimetre to 0.25 millimetre.

16. The optical fiber cable (100, 200, 300) as claimed in claim 1, wherein the one or more tubes (104) have an inner diameter of 0.9 millimetres to 1.35 millimetres.

17. The optical fiber cable (100, 200, 300) as claimed in claim 1, wherein the one or more tubes (104) have an outer diameter of 1.1 millimetres to 1.5 millimetres.

18. The optical fiber cable (100, 200, 300) as claimed in claim 1, wherein the sheath (106) has a thickness of 1.2 millimetre to 1.8 millimetre.

19. The optical fiber cable (100, 200, 300) as claimed in claim 1, wherein the one or more strength members (108) have a diameter of 0.3 mm to 0.7 mm.

## Patentansprüche

1. Optisches Faserkabel (100, 200, 300) umfassend:
ein oder mehrere Rohre (104), worin das eine oder die mehreren Rohre (104) zumindest eine optische Faser (102) umschließen;
einen Mantel (106), der das eine oder die mehreren Rohre (104) umgibt; und
ein oder mehrere Verstärkungselemente (108),
worin das eine oder die mehreren Verstärkungselemente (108) sich in einer vorgedehnten Ausgestaltung befinden,
**dadurch gekennzeichnet, dass**
das eine oder die mehreren Verstärkungselemente (108) um 0.02% - 0.1% in der vorgedehnten Ausgestaltung gedehnt sind und dass das eine oder die mehreren Verstärkungselemente (108) in dem Mantel (106) eingebettet sind.

2. Optisches Faserkabel (100, 200, 300) nach Anspruch 1, worin das optische Faserkabel (100, 200, 300) eine Zugbruchlast von weniger als 2100N hat.

3. Optisches Faserkabel (100, 200, 300) nach Anspruch 1, worin jedes von dem einen oder den mehreren Verstärkungselementen (108) zwei oder mehrere Metalllitzendrähte umfasst.

4. Optisches Faserkabel (100, 200, 300) nach Anspruch 1, worin das eine oder die mehreren Verstärkungselemente (108) unter einer Spannung von 14.709975-78.4532 N (1.5-8 kp) eingebettet sind.

5. Optisches Faserkabel (100, 200, 300) nach Anspruch 1, worin das eine oder die mehreren Verstärkungselemente (108) eine Dehnung beim Bruch von weniger als oder gleich 2% haben.

6. Optisches Faserkabel (100, 200, 300) nach Anspruch 1, worin das eine oder die mehreren Verstärkungselemente (108) eine durchschnittliche Oberflächenrauheit von 1um bis 5um haben.

7. Verfahren zur Herstellung eines optischen Faserkabels (100, 200, 300) umfassend:
Abrollen von einem oder mehreren Rohren (104), um einen Kern des optischen Faserkabels (100, 200, 300) zu bilden, worin das eine oder die mehreren Rohre (104) zumindest eine optische Faser (102) umschließen;
Extrudieren eines Mantels (106), der das eine oder die mehreren Rohre (104) umgibt,
**dadurch gekennzeichnet, dass** ein oder mehrere Verstärkungselemente (108) während des Extrudierens in dem Mantel (106) eingebettet sind, worin das eine oder die mehreren Verstärkungselemente (108) unter einer Spannung von mehr als oder gleich 14.709975 N (1.5 kp) eingebettet sind,
und das eine oder die mehreren Verstärkungselemente (108) unter der Spannung um 0.02% - 0.1% gedehnt sind.

8. Verfahren nach Anspruch 7, worin das optische Faserkabel (100, 200, 300) eine Zugbruchlast von weniger als 2100N hat.

9. Verfahren nach Anspruch 7, worin das eine oder die mehreren Verstärkungselemente (108) Metalllitzendrähte sind.

10. Verfahren nach Anspruch 7, worin das eine oder die mehreren Verstärkungselemente (108) unter einer Spannung von weniger als 78.4532 N (8 kp) eingebettet sind.

11. Verfahren nach Anspruch 7, worin das eine oder die mehreren Verstärkungselemente (108) eine Dehnung beim Bruch von weniger als oder gleich 2% haben.

12. Verfahren nach Anspruch 7, worin das eine oder die mehreren Verstärkungselemente (108) eine durchschnittliche Oberflächenrauheit von 1um bis 5um haben.

13. Optisches Faserkabel (100, 200, 300) nach Anspruch 1, worin die zumindest eine optische Faser (102) einen inneren Kernbereich und einen äußeren Umhüllungsbereich umfasst.

14. Optisches Faserkabel (100, 200, 300) nach Anspruch 1, worin die zumindest eine optische Faser (102) einen Durchmesser von 160 um bis 250 um hat.

15. Optisches Faserkabel (100, 200, 300) nach Anspruch 1, worin das eine oder die mehreren Rohre (104) eine Dicke von 0.1 Millimetern bis 0.25 Millimetern haben.

16. Optisches Faserkabel (100, 200, 300) nach Anspruch 1, worin das eine oder die mehreren Rohre (104) einen Innendurchmesser von 0.9 Millimetern bis 1.35 Millimetern haben.

17. Optisches Faserkabel (100, 200, 300) nach Anspruch 1, worin das eine oder die mehreren Rohre (104) einen Außendurchmesser von 1.1 Millimetern bis 1.5 Millimetern haben.

18. Optisches Faserkabel (100, 200, 300) nach Anspruch 1, worin der Mantel (106) eine Dicke von 1.2 Millimetern bis 1.8 Millimetern hat.

19. Optisches Faserkabel (100, 200, 300) nach Anspruch 1, worin das eine oder die mehreren Verstärkungselemente (108) einen Durchmesser von 0.3 mm bis 0.7 mm haben.

## Revendications

1. Câble à fibre optique (100, 200, 300), comprenant :
un ou plusieurs tubes (104), dans lequel les un ou plusieurs tubes (104) renferment au moins une fibre optique (102) ;
une gaine (106) entourant les un ou plusieurs tubes (104) ; et
un ou plusieurs éléments de renfort (108), dans lequel les un ou plusieurs éléments de renfort (108) sont dans une configuration pré-allongée,
**caractérisé en ce que**
les un ou plusieurs éléments de renfort (108) sont allongés de 0.02 % à 0.1 % dans la configuration pré-allongée et **en ce que** les un ou plusieurs éléments de renfort (108) sont incorporés dans la gaine (106).

2. Câble à fibre optique (100, 200, 300) selon la revendication 1, dans lequel le câble à fibre optique (100, 200, 300) présente une charge de rupture à la traction inférieure à 2100N.

3. Câble à fibre optique (100, 200, 300) selon la revendication 1, dans lequel chacun des un ou plusieurs éléments de renfort (108) comprend deux fils métalliques toronnés ou plus.

4. Câble à fibre optique (100, 200, 300) selon la revendication 1, dans lequel les un ou plusieurs éléments de renfort (108) sont incorporés à une tension de 14.709975 à 78.4532 N (1.5 à 8 kgf).

5. Câble à fibre optique (100, 200, 300) selon la revendication 1, dans lequel les un ou plusieurs éléments de renfort (108) ont un allongement à la rupture inférieur ou égal à 2 %.

6. Câble à fibre optique (100, 200, 300) selon la revendication 1, dans lequel les un ou plusieurs éléments de renfort (108) ont une rugosité de surface moyenne de 1um à 5um.

7. Procédé de fabrication d'un câble à fibre optique (100, 200, 300) comprenant :
le déroulement d'un ou de plusieurs tubes (104) pour former une âme du câble à fibre optique (100, 200, 300), dans lequel les un ou plusieurs tubes (104) renferment au moins une fibre optique (102) ;
l'extrusion d'une gaine (106) entourant les un ou plusieurs tubes (104) ,
**caractérisé en ce qu'**un ou plusieurs éléments de renfort (108) sont incorporés dans la gaine (106) pendant l'extrusion, dans lequel les un ou
plusieurs éléments de renfort (108) sont incorporés sous une tension supérieure ou égale à 14.709975 N (1.5 kgf), et
les un ou plusieurs éléments de renfort (108) sont allongés de 0.02 % à 0.1 % sous la tension.

8. Procédé selon la revendication 7, dans lequel le câble à fibre optique (100, 200, 300) présente une charge de rupture à la traction inférieure à 2100N.

9. Procédé selon la revendication 7, dans lequel les un ou plusieurs éléments de renfort (108) sont des fils métalliques toronnés.

10. Procédé selon la revendication 7, dans lequel les un ou plusieurs éléments de renfort (108) sont incorporés à une tension inférieure à 78.4532 N (8 kgf).

11. Procédé selon la revendication 7, dans lequel les un ou plusieurs éléments de renfort (108) présentent un allongement à la rupture inférieur ou égal à 2%.

12. Procédé selon la revendication 7, dans lequel les un ou plusieurs éléments de renfort (108) présentent une rugosité de surface moyenne de 1um à 5um.

13. Câble à fibre optique (100, 200, 300) selon la revendication 1, dans lequel l'au moins une fibre optique (102) comprend une région d'âme interne et une région de gaine externe.

14. Câble à fibre optique (100, 200, 300) selon la revendication 1, dans lequel l'au moins une fibre optique (102) a un diamètre de 160 um à 250 um.

15. Câble à fibre optique (100, 200, 300) selon la revendication 1, dans lequel les un ou plusieurs tubes (104) ont une épaisseur de 0.1 millimètre à 0.25 millimètre.

16. Câble à fibre optique (100, 200, 300) selon la revendication 1, dans lequel les un ou plusieurs tubes (104) ont un diamètre interne de 0.9 millimètre à 1.35 millimètre.

17. Câble à fibre optique (100, 200, 300) selon la revendication 1, dans lequel les un ou plusieurs tubes (104) ont un diamètre externe de 1.1 millimètre à 1.5 millimètre.

18. Câble à fibre optique (100, 200, 300) selon la revendication 1, dans lequel la gaine (106) a une épaisseur de 1.2 millimètre à 1.8 millimètre.

19. Câble à fibre optique (100, 200, 300) selon la revendication 1, dans lequel les un ou plusieurs éléments de renfort (108) ont un diamètre de 0.3 mm à 0.7 mm.
